# FASCICULE DE BREVET EUROPEEN

(11) **EP 0 291 406 B1**
(45) Date de publication et mention de la délivrance du brevet: **07.04.1993**
(21) Numéro de dépôt: 88401139.6
(22) Date de dépôt: 10.05.1988
(51) Int. Cl.: B44B 3/00, B44B 3/06, F21P 5/04, G03B 21/00, G05B 19/42

(54) **Procédé et dispositif pour établir et graver un motif lumineux**
Verfahren und Vorrichtung zur Erzeugung eines Lichtmusters und dessen Gravierung
Method and device for the production of an illuminated design and its engraving

(30) Priorité: 13.05.1987 FR 8706722
(43) Date de publication de la demande: 17.11.1988
(73) Titulaire: Leclercq, Didier, F-75009 Paris (FR)
(72) Inventeur: Leclercq, Didier, F-75009 Paris (FR)
(74) Mandataire: CABINET BONNET-THIRION

(56) Documents cités:
- EP-A- 0 007 125
- EP-A- 0 253 081
- CH-A- 89 965
- FR-A- 1 503 720
- FR-A- 2 346 736
- FR-A- 2 576 803
- GB-A- 606 178
- US-A- 4 254 552
- US-A- 4 609 268
- METALWORKING PRODUCTION, vol. 129, no. 2, février 1985, page 67; NEWING HALL LTD: "PNC programming Aid: The perfect complement to the machine that has (almost) everything"

## Description

La présente invention concerne un procédé et un dispositif pour établir et graver un motif destiné à réaliser, après avoir été placé dans le faisceau lumineux d'un projecteur, une zone éclairée. Plus particulièrement un tel motif est destiné à être projeté sur une scène, de sorte à créer un décor lumineux.

Il est déja connu de munir une plaque opaque à la lumière d'une zone transparente destinée à laisser passer un faisceau lumineux uniquement à l'intérieur de ladite zone.

Cette zone peut être de toute forme appropriée, par exemple une étoile. Lorsqu'un faisceau lumineux traverse cette zone, la forme de cette zone est reproduite sur un écran, ou une scène.

Dans le domaine scénique il est courant d'utiliser de telles plaques munies de zones transparents pour réaliser un décor lumineux sur une scène.

Il existe dans le commerce des plaques munies de zones transparentes aux formes pré-établies. Cependant l'utilisateur de telles plaques ne peut réaliser lui-même les plaques munies des motifs dont il a besoin. En outre l'utilisateur ne peut pas non plus créer lors du déroulement d'un spectacle ses propres plaques et il est obligé de préparer à l'avance tous les motifs dont il aura besoin.

Il est également connu notamment par le document US-A-4 609 268 de prévoir un dispositif de projection de faisceau lumineux apte à former une zone éclairée par exemple sur un écran, et un moyen de stockage de motifs tel qu'un dispositif adapté à être placé dans le faisceau lumineux pour projeter un motif désiré. De tels dispositifs de projection ne permettent pas à l'utilisateur de définir et de graver les motifs sur le moyen de stockage de motifs.

Le but de l'invention est de pallier l'ensemble de ces inconvénients en prévoyant un procédé et un dispositif permettant à l'utilisateur de définir puis de graver simultanément ou postérieurement ses propres motifs, susceptibles d'être placés dans un faisceau lumineux pour la visualisation sur un écran ou scène, ceci de manière simple et rapide.

La présente invention a encore pour but d'offrir la possibilité à l'utilisateur de créer un espace lumineux de n'importe quelle forme et dimension à l'aide d'un ou plusieurs appareils de projection.

A cet effet, la présente invention concerne un procédé pour établir et graver un motif destiné à réaliser après avoir été placé dans le faisceau lumineux d'un projecteur, une zone éclairée de n'importe quelles formes et dimensions, ladite zone éclairée étant visualisée sur un écran, ledit procédé étant caractérisé en ce qu'il comporte les étapes suivantes :
- définition d'un point de référence formant par projection une zone de lumière contrastée sur ledit écran;
- déplacement dudit point de référence dans le faisceau lumineux du projecteur de sorte que sa trajectoire définisse une zone de lumière contrastée désirée et visualisation de ce déplacement;
- gravure de façon simultanée ou postérieurement au déplacement du point de référence, suivant une trajectoire correspondant à celle du point de référence sur un moyen de stockage de motifs.

La présente invention concerne également un dispositif de définition et de gravure de motifs destinés à être placés dans un faisceau lumineux, comportant un dispositif de projection de faisceau lumineux apte à former une zone éclairée sur un écran, un moyen de stockage de motifs adapté à être placé dans le faisceau lumineux pour projeter un motif désiré, caractérisé en ce qu'il comporte un point de référence adapté à être positionné dans le faisceau lumineux du dispositif de projection pour former une zone de lumière contrastée, un dispositif de déplacement du point de référence dans le faisceau lumineux pour définir une zone de lumière contrastée de forme désirée, un moyen pour graver mobile par rapport au moyen de stockage de motifs, un dispositif de commande de déplacement du moyen pour graver par rapport au moyen de stockage de motifs suivant une trajectoire correspondant à celle du point de référence pour graver le motif désiré sur le moyen de stockage.

Grâce à ces dispositions l'utilisateur peut réaliser lui-même les motifs dont il a besoin, au préalable ou directement pendant un spectacle. Il peut à loisir grossir ou diminuer la forme projetée sur l'écran et ceci depuis un pupitre et sans avoir à manipuler de quelque façon que ce soit la plaque servant de support aux motifs.

D'autres objets, caractéristiques et avantages de l'invention ressortiront d'ailleurs de la description qui va suivre donnée à titre d'exemple en référence aux dessins annexés dans lesquels :
la figure 1 est une vue schématique en perspective d'un dispositif de projection de type connu ;
la figure 2 est une vue schématique en perspective d'un dispositif de projection selon un premier mode de réalisation de l'invention,
la figure 3 est une vue schématique en perspective montrant le dispositif de commande du dispositif de projection selon le premier mode de réalisation de l'invention,
la figure 4 est une vue en perspective montrant une plaque à graver montée sur un dispositif de déplacement,
la figure 5 est une vue schématique en perspective montrant le dispositif de gravure selon le premier mode de réalisation de l'invention,
la figure 6 est une vue schématique montrant une plaque à graver, un système de point de référence et un dispositif de gravure selon un second mode de réalisation de l'invention,
la figure 7 est une vue analogue à la figure 6 montrant le dispositif selon le second mode de réalisation de l'invention en position de gravure,
la figure 8 est une vue analogue à la figure 6 montrant le dispositif selon le second mode de réalisation de l'invention en position de projection ou de repos.

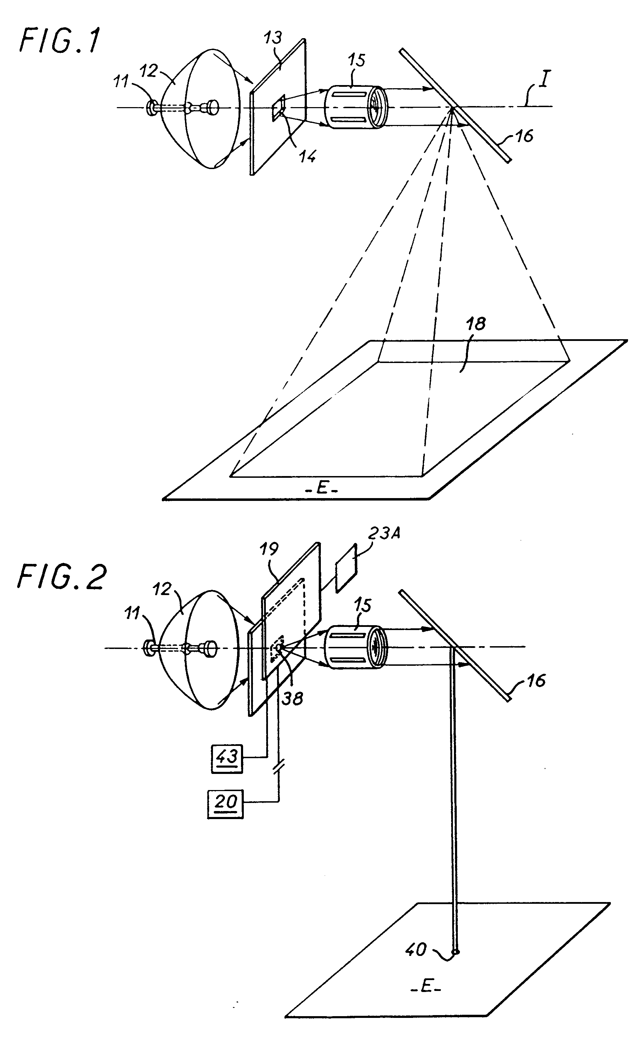

Un dispositif de projection de type connu (figure 1), comporte généralement une lampe 11, un miroir elliptique 12, une plaque 13 munie d'une fenêtre de projection 14, un objectif 15 et un miroir 16.

Lorsqu'un faisceau lumineux est émis par la lampe 11 selon la direction d'un axe optique I, on obtient sur un écran E, après réflexion sur le miroir 16, une surface éclairée 18 reproduisant la forme de la fenêtre de projection 14. L'écran E peut être de toute nature; il peut être constitué par une scène, ou un écran proprement dit.

Le dispositif selon l'invention, tel que décrit et représenté aux figures 2 à 5, comporte en outre par rapport à un dispositif de projection classique, une plaque à graver 19 reliée à un dispositif de commande 20 de cette plaque et à un dispositif de gravure 43.

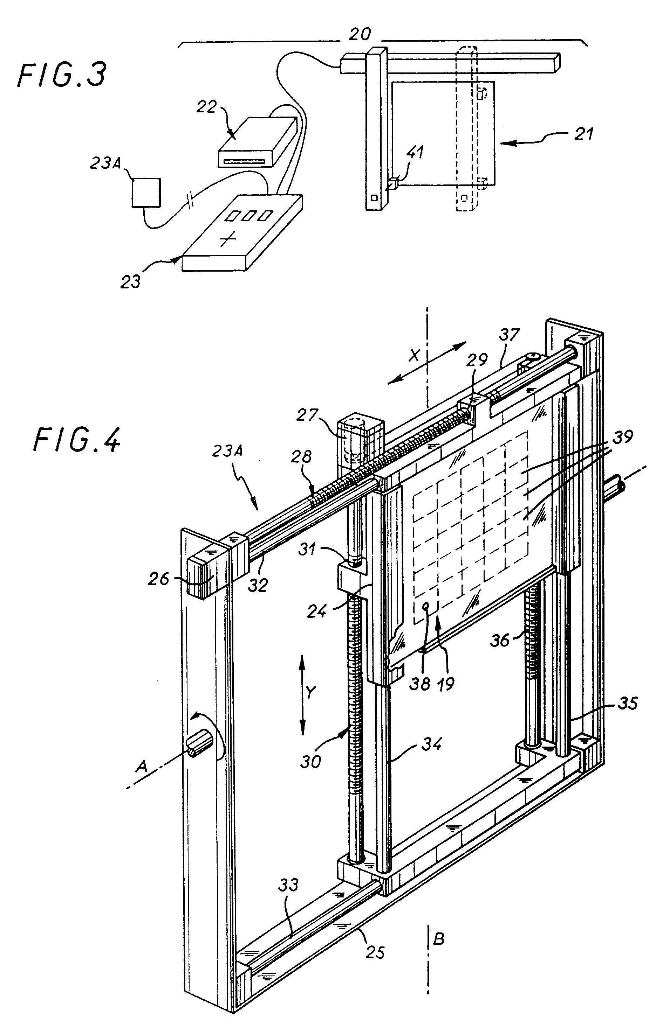

Le dispositif de commande 20 de la plaque à graver (figure 3) est constitué par une machine à dessiner 21 un enregistreur 22, un dispositif de positionnement 23 et un dispositif de déplacement 23A de la plaque à graver.

La plaque à graver 19 est maintenue en place dans le dispositif de déplacement 23A par un support 24 (figure 4) lui-même relié à un cadre 25. Le support 24 est déplaçable selon deux directions X et Y, grâce à deux moteurs 26,27.

Le moteur 26 permet d'entraîner en rotation une vis sans fin transversale 28, reliée au support 24 par un filetage 29, tandis que le moteur 27 permet d'entraîner en rotation une vis sans fin longitudinale 30 reliée au support 24 par un filetage 31.

Le support 24 est guidé à coulissement par des guides transversaux 32 et 33 et longitudinaux 34 et 35.

Une deuxième vis sans fin longitudinale 36 est entraînée en rotation simultanément avec la vis longitudinale 30, grâce à une transmission par chaîne 37.

Le cadre 25 peut pivoter selon deux axes perpendiculaires A et B.

La plaque à graver 19 est constituée par une plaque de verre dont l'une des faces est recouverte d'une matière opaque à la lumière, telle qu'une pellicule, sauf en un point, appelé point de référence 38, laissé transparent à la lumière.

Cette plaque 19 est destinée à porter des gravures effectuées dans des emplacements 39 (en pointillés à la figure 4) non physiquement délimités sur la plaque 19, mais dont les formes et dimensions sont connues du dispositif selon l'invention.

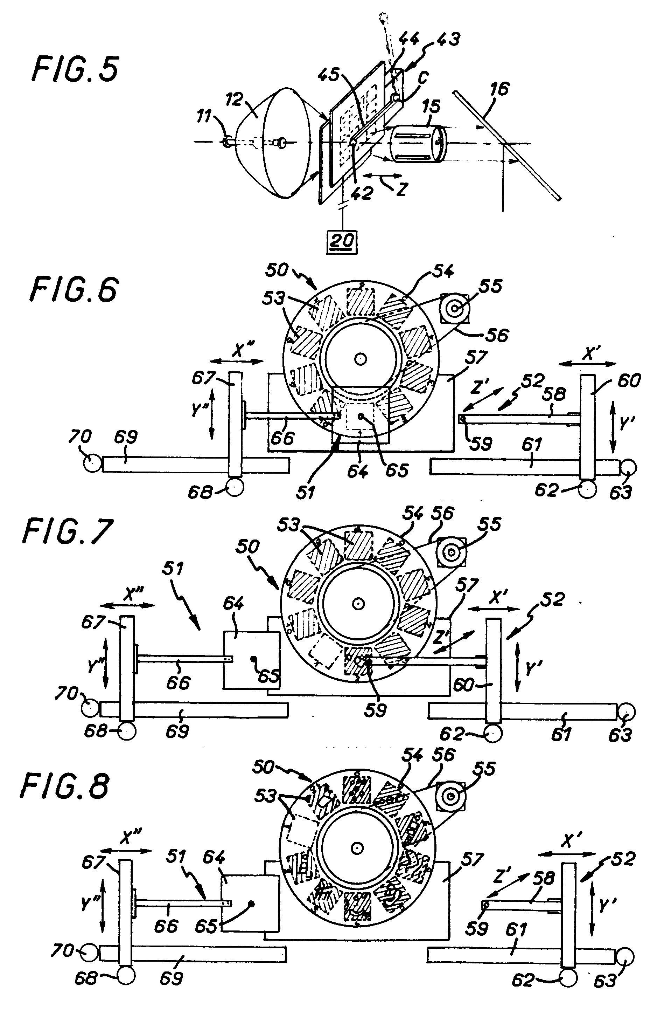

Le dispositif de gravure 43 (figure 5) comporte un boîtier de commande 44 d'une pointe pour graver 42, portée par un bras 45 pivotant autour d'un axe C.

La pointe pour graver 42 est déplaçable selon un axe Z grâce à un électro-aimant qui la maintient soit en position écartée de la plaque à graver 19, soit en contact avec cette plaque.

Le bras pivotant 45 présente une position de travail, telle que représentée à la figure 5 en traits pleins, et une position de repos représentée en traits pointillés.

Le fonctionnement du dispositif selon l'invention est décrit ci-après.

Le faisceau lumineux émis par la lampe 11 (figure 2) traverse la fenêtre de projection 14 de la plaque 13 et le point de référence 38 de la plaque à graver puis l'objectif 15, avant d'être réfléchi par le miroir 16 vers l'écran E, où il crée un point lumineux 40.

Un utilisateur en contact visuel avec l'écran E place alors la pointe d'un crayon 41 dans un dispositif support de crayon de la machine à dessiner 21 (Fig. 3).

Lorsque l'utilisateur déplace le crayon 41 sur sa machine à dessiner, le mouvement qu'il effectue est transmis au dispositif de positionnement 23, puis au dispositif de déplacement 23A et plus particulièrement aux moteurs 26 et 27 qui déplacent alors de façon correspondante la plaque à graver 19 et donc le point de référence 36 dans le faisceau lumineux émis par la lampe 11. De ce fait le point lumineux 40 décrit sur l'écran E un déplacement proportionnel à celui décrit par le crayon 41 de l'utilisateur sur la machine à dessiner.

On voit ainsi que l'utilisateur peut dessiner et/ou écrire avec le point lumineux 40, c'est-à-dire en fait déplacer le point lumineux 40 sur l'écran E, de n'importe quelle façon, simplement en dessinant, et/ou en écrivant avec un crayon 41 c'est-à-dire en déplaçant ce crayon 41 sur une machine à dessiner.

Lorsque l'utilisateur désire non plus déplacer un point lumineux sur un écran, mais projeter sur cet écran un contour lumineux qu'il a lui même défini, il procède alors de la manière suivante.

Dans un premier temps l'utilisateur déplace son crayon 41 sur la machine à dessiner selon le motif qu'il désire projeter tandis que l'enregistreur 22 est en fonctionnement. Comme dans le cas précédemment décrit, le point lumineux 40 se déplace sur l'écran E de façon proportionnelle au déplacement du crayon 41. Dès que la totalité du motif que l'utilisateur désire projeter a été réalisée, l'enregistreur 22 est alors arrêté. L'enregistreur a maintenant mémorisé le déplacement de la plaque à graver 19 dans le faisceau lumineux pour créer le motif désiré par l'utilisateur.

Au départ de l'enregistrement par l'enregistreur 22 du motif désiré, la plaque à graver 19 est placée de sorte que le point de référence 38 se trouve sur l'axe optique I.

Dans un deuxième temps l'utilisateur sélectionne, grâce au dispositif de positionnement 23, l'emplacement 39 sur la plaque à graver 19 qu'il désire graver. Le centre de l'emplacement 39 sélectionné est alors positionné sur l'axe optique I par déplacement de la plaque à graver 19 grâce aux moteurs 26 et 27.

L'électro-aimant permettant la mise en contact de la pointe pour graver 42 avec le centre de l'emplacement 39 sélectionné est alors activé.

L'enregistreur 22 commande alors le dispositif de déplacement 23A et de ce fait le déplacement de la plaque à graver 19 selon les données qu'il a mémorisées.

La pointe pour graver 42 gratte alors la matière opaque recouvrant l'emplacement 39 sélectionné selon le déplacement de la plaque à graver 19.

Lorsque tout le motif enregistré a été ainsi reproduit sur l'emplacement 39 sélectionné, il suffit alors de désactiver l'électro-aimant de la pointe pour graver pour que celle-ci ne soit plus en contact avec la plaque à graver. Par la suite le bras pivotant 45 est placé en position de repos par commande de la rotation du bras 45 autour de l'axe C.

Pendant toute la durée de la gravure, si la lampe 11 émet un faisceau lumineux, le motif que l'on désire reproduire est projeté au fur et à mesure de sa gravure sur l'écran E.

Lorsque l'on désire projeter un motif déjà gravé, le bras 45 portant la pointe pour graver est placé en position de repos.

On a ainsi réalisé soi-même un motif gravé qui peut être projeté sur un écran. Il est alors facile de se constituer une bibliothèque de motifs originaux à projeter.

Bien sûr il est possible de mémoriser un nombre quelconque de motifs et de n'en graver que quelques uns. Les emplacements 39 destinés à être gravés peuvent être gravés dans n'importe quel ordre.

Lorsqu'une plaque à graver 19 est entièrement gravée, elle est retirée du support de plaque et remplacée par une plaque vierge. Le nombre et la dimension des emplacements 39 ne sont pas limités, mais doivent être indiqués au dispositif de positionnement.

L'opération de gravure a été décrite comme étant réalisée en deux temps distincts mais en fait ces deux temps peuvent être confondus. Ainsi il est possible de graver directement sur la plaque 19 un motif réalisé directement sur la machine à dessiner et non mémorisé par l'enregistreur 22.

Les motifs gravés peuvent être de toutes formes et toutes natures, il peut s'agir par exemple uniquement de contours lumineux (étoiles, carrés...) ou bien de taches lumineuses (disques, damiers,...). Il est à noter qu'en gravant un dessin en perspective on peut donner à la projection l'illusion que ce dessin est en trois dimensions. En outre un même emplacement à graver 39 peut porter plusieurs motifs différents de sorte que lorsque cet emplacement est éclairé toute la scène ou l'écran soit rempli de taches, objets ou contours lumineux.

Bien entendu il est possible de graver les uns à la suite des autres des dessins destinés à être projetés les uns après les autres, soit en ménageant un arrêt entre chaque dessin, soit en réalisant une suite de dessins non délimités entre eux, soit en réalisant des fondus enchainés. Dans ce dernier cas il est nécessaire d'utiliser deux dispositifs selon l'invention.

Les figures 6 à 8 illustrent un second mode de réalisation d'une plaque à graver 50, d'un système de point de référence 51 et d'un dispositif de gravure 52 selon l'invention.

Dans ce second mode de réalisation la plaque à graver 50 est constituée par un disque 54 sur lequel sont présents des emplacements 53, physiquement non délimités mais connus du dispositif selon l'invention.

Le disque 54 est entraîné en rotation autour d'un axe D grâce à un moteur d'entraînement 55 transmettant son mouvement au disque 54 par l'intermédiaire d'une chaîne 56.

Le disque 54 est réalisé en matière opaque, sauf l'un de ses emplacements qui est translucide.

Comme précédemment le disque 54 reçoit un faisceau lumineux en provenance d'une lampe (non représentée), par l'intermédiaire d'une fenêtre de projection (non représentée) portée par une plaque 57.

Le dispositif de gravure 52 comporte un bras 58 muni à son extrémité libre d'une pointe pour graver 59 déplaçable selon un axe Z' grâce à un électro-aimant. Le bras 58 est en outre monté de façon coulissante selon un axe Y', grâce à un moteur 62, sur un support vertical 60. Le support vertical 60 se déplace selon un axe X' le long d'un guide 61, grâce à un moteur 63.

La pointe pour graver 59 est donc déplaçable selon trois axes X', Y', Z'.

Le système de point de référence 51 est constitué par une plaque opaque 64 munie d'un point de référence translucide 65. Cette plaque est fixée par l'intermédiaire d'un bras 66 coulissant, selon un axe Y", le long d'un guide 67, grâce à un moteur 68.

Le guide 67 est quant à lui monté coulissant selon un axe X" le long d'un guide 69 grâce à un moteur 70.

Le système de point de référence 51 est donc déplaçable selon deux axes X" et Y". En outre le déplacement du système de point de référence 51 est analogue au déplacement du dispositif de gravure 52.

Le fonctionnement du dispositif représenté aux figures 6 à 8 est explicité ci-après.

Lorsque le dispositif selon l'invention est au repos ou sert à la projection, (voir figure 8) le dispositif de gravure 52 et le système de point de référence 51 sont placés à l'écart du disque 54, et en tout cas en dehors du faisceau lumineux issu de la lampe (non représentée).

Lorsque l'on désire mémoriser un motif ou faire déplacer la tache lumineuse sur l'écran E, on place le système de point de référence 51 devant le disque 54 (figure 6) de sorte que le point de référence 65 de la plaque opaque 64 soit au centre de l'emplacement translucide du disque 54.

Comme dans le mode de réalisation précédent, le déplacement d'un crayon sur une machine à dessiner provoque un déplacement proportionnel du point de référence 65 devant le disque 54. Le disque 54 est bien sûr fixe. Le déplacement du point de référence 65 pour créer un motif, peut comme dans le premier mode de réalisation être mémorisé.

Lorsque l'on désire graver un motif mémorisé (figure 7), le système de point de référence 51 est déplacé selon l'axe X" de sorte qu'il ne soit pas devant le disque 54.

On sélectionne alors un emplacement à graver 53 par rotation du disque 54 de sorte que cet emplacement à graver soit placé dans la position qu'occupait l'emplacement translucide lors de la mémorisation du motif. Le dispositif de gravure 52 est alors déplacé selon l'axe X' de sorte que la pointe pour graver soit placée au milieu de l'emplacement opaque 53 sélectionné. La pointe pour graver est alors mise en contact avec cet emplacement sélectionné. Le déplacement du dispositif de gravure est effectué à partir des données enregistrées lors du déplacement du système de point de référence 51. Bien sûr ces données sont traitées par une unité de calcul, non représentée, puisque les déplacements du système de point de référence 51 et du dispositif de gravure 52 sont inverses. En pratique l'unité de calcul peut être un simple inverseur de polarité. Lors de l'opération de gravure le disque 54 est fixe.

En variante, le dispositif de gravure et le système de point de référence peuvent être placés d'un même côté par rapport au disque à graver 54. Dès lors, les mouvements du système de point de référence et du dispositif de gravure sont analogues.

Il est à noter que comme dans le cas du premier mode de réalisation les motifs mémorisés et/ou gravés peuvent être de toutes formes et nature et un même emplacement 53 peut supporter plusieurs motifs distincts. Il est à noter que les deux modes de réalisation ci-dessus décrits sont destinés à être utilisés avec un ordinateur. Ainsi la mémorisation des données peut être avantageusement réalisée sur disquette ou sur tout support adéquat.

De même, il est possible que le système de point de référence soit, non pas un point lumineux sur un écran opaque, mais un point opaque sur un écran lumineux.

Il est également à noter qu'en variante le dispositif de gravure peut être remplacé par un dispositif de marquage destiné à opacifier des emplacements de plaque ou de disque qui à l'origine sont translucides. Le principe de fonctionnement reste cependant analogue.

Il est à noter que le fait que chaque motif soit enregistré permet, lorsque le dispositif selon l'invention est utilisé dans un autre lieu que celui dans lequel les motifs ont été enregistrés, de s'adapter aux nouvelles dimensions de l'écran en multipliant (ou en divisant) par un facteur approprié les données correspondant au motif enregistré.

Il est possible d'associer plusieurs appareils de projection munis de plaque ou disque selon l'invention avec une seule et unique machine à dessiner, un enregistreur et un dispositif permettant de commander chaque appareil de projection séparément ou ensemble.

Un troisième mode de réalisation (non représenté) de la présente invention, est constitué par un dispositif simplifié comportant un support à graver, un système de point de référence et un dispositif de gravure.

Le support à graver est dans ce cas une bande de matière plastique transparente, divisée en une pluralité d'emplacements disposés les uns à la suite des autres sur la bande. Cette bande est déplaçable dans le faisceau lumineux d'un projecteur, grâce à des moteurs appropriés, de sorte que chaque emplacement puisse être amené dans ledit faisceau lumineux.

Le système de point de référence est une pointe qui se déplace dans le faisceau lumineux du projecteur. Cette pointe est placée entre la bande à graver et un objectif du type de celui représenté à la figure 1. Lorsque le système de point de référence est déplacé dans le faisceau lumineux, il crée une ombre qui se déplace sur un écran ou une scène entièrement éclairée. Le déplacement de ce point de référence est réalisé grâce au déplacement correspondant d'un crayon sur une table à dessiner. Le déplacement d'un tel point de référence peut être mémorisé pour être retransmis à un système de gravure dont la tâche est d'opacifier sur la bande support un emplacement initialement translucide, de sorte à reproduire le contour lumineux mémorisé en l'inversant. En effet, le contour mémorisé était constitué par une zone d'ombre sur une scène entièrement éclairée, et doit être transformé par le dispositif de gravure, en une zone lumineuse projetée sur une scène non éclairée. Cette inversion n'est cependant pas obligatoire et tout dépend de la mise en scène désirée.

Le dispositif de gravure est constitué par un crayon déposant une couleur sur un emplacement de la bande formant le support à graver.

Il est à noter que l'on peut ainsi obtenir des images ou des contours lumineux colorés.

Bien sûr la mémorisation et la gravure d'un motif peuvent être réalisées en même temps.

Il est bien sûr possible de délimiter sur l'emplacement de la bande formant support à graver, les différentes zones à opacifier, et de réaliser cette opacification par un simple coloriage manuel. On minimise alors le coût d'un tel dispositif.

Bien entendu l'invention n'est pas limitée aux modes de réalisations choisis et il est possible d'envisager d'autres variantes sans sortir du cadre de l'invention. Par exemple la forme du moyen de stockage (plaque ou disque) ainsi que sa dimension peuvent être quelconques.

Il est à noter que quel que soit le mode de réalisation, il est toujours possible de créer un motif lumineux coloré. Dans le cadre des premier et second modes de réalisation, il suffit que la plaque portant la pellicule opaque soit colorée, ou bien que l'on vienne déposer, manuellement ou automatiquement une ou plusieurs couleurs sur cette plaque aux endroits où la pellicule opaque a été retirée.

La présente invention permet de créer des contours et permet donc également d'enregistrer le contour d'un objet existant quelle que soit la dimension de cet objet. De ce fait, et bien que la présente invention ait été créée pour le domaine scénique que ce soit en studio ou en extérieur, elle peut être utilisée-comme aide à la création par exemple pour permettre de définir les contours de nouveaux meubles ou d'autres objets. De même, elle peut être utilisée dans le domaine de la couture, de la décoration, de l'architecture.

En effet, grâce à la présente invention, il est facile de recopier la forme d'un vêtement, d'un objet, d'une maison. Dans ce cas, il suffit tout simplement de suivre avec le spot lumineux créé par le projecteur selon l'invention, les contours du vêtement, de l'objet, de la maison en question. Ces contours sont mémorisés. Ces données enregistrées peuvent faire fonctionner tout type d'appareil, par exemple des outils de coupe de tissus pour réaliser un vêtement. Ces données enregistrées peuvent également être gravées, pour être ensuite projetées sur un écran, puis grossies ou diminuées et ainsi servir à matérialiser le contour enregistré, pour effectuer tout travail de création, modifications, etc ... sur celui-ci.

## Revendications

1. Procédé pour établir et graver un motif destiné à réaliser, après avoir été placé dans le faisceau lumineux d'un projecteur, une zone éclairée (18) de n'importe quelle forme et dimension, ladite zone éclairée étant visualisée sur un écran (E), ledit procédé étant caractérisé en ce qu'il comporte les étapes suivantes :
- définition d'un point de référence (38,65) formant par projection une zone de lumière contrastée (40) sur ledit écran;
- déplacement dudit point de référence dans le faisceau lumineux du projecteur de sorte que sa trajectoire définisse une zone de lumière contrastée désirée et visualisation de ce déplacement;
- gravure de façon simultanée ou postérieurement au déplacement du point de référence, suivant une trajectoire correspondant à celle du point de référence sur un moyen de stockage de motifs (19,50).

2. Procédé selon la revendication 1, caractérisé en ce qu'il comporte en outre entre l'étape de déplacement du point de référence et l'étape de gravure une étape d'enregistrement du déplacement dudit point de référence, et en ce que l'étape de gravure permet de graver le motif enregistré.

3. Procédé selon l'une quelconque des revendications précédentes, dans lequel ledit moyen de stockage de motifs (19,50) présente une pluralité d'emplacements déterminés (39,53) à graver, et en ce que ledit procédé comporte en outre les étapes suivantes :
- positionnement d'un quelconque des emplacements (39,53) du moyen de stockage (19,50) dans le faisceau lumineux pour projeter le motif gravé dans l'emplacement marqué sélectionné postérieurement parmi l'un quelconque des emplacements vierges ou non du moyen de stockage par rapport à un moyen pour graver.

4. Dispositif de définition et de gravure de motifs destinés à être placés dans un faisceau lumineux, comportant un dispositif de projection de faisceau lumineux (11,12) apte à former une zone éclairée (18) sur un écran (E), un moyen de stockage de motifs (19,50) adapté à être placé dans le faisceau lumineux pour projeter un motif désiré, caractérisé en ce qu'il comporte un point de référence (38,65) adapté à être positionné dans le faisceau lumineux du dispositif de projection pour former une zone de lumière contrastée (40), un dispositif de déplacement du point de référence (23A,51) dans le faisceau lumineux pour définir une zone de lumière contrastée de forme désirée, un moyen pour graver (42,59) mobile par rapport au moyen de stockage de motifs (19,50), un dispositif de commande de déplacement (20,52) du moyen pour graver par rapport au moyen de stockage de motifs suivant une trajectoire correspondant à celle du point de référence pour graver le motif désiré sur le moyen de stockage.

5. Dispositif selon la revendication 4, caractérisé en ce que le dispositif de commande de déplacement (20,52) comporte en outre un dispositif d'enregistrement (22) de la trajectoire du point de référence, afin de commander le déplacement du moyen pour graver (42,59) par rapport au moyen de stockage de motifs (19,50) suivant la trajectoire enregistrée.

6. Dispositif selon la revendication 4 ou 5, caractérisé en ce que le moyen de stockage de motifs comporte une pluralité d'emplacements (39,53) de motifs, et que le dispositif comporte en outre un dispositif de déplacement (23A;55,56) du moyen de stockage de motifs d'emplacement en emplacement pour permettre soit la gravure d'un motif dans un emplacement déterminé, soit la projection du motif gravé dans un emplacement déterminé.

7. Dispositif selon la revendication 4, 5 ou 6, caractérisé en ce que le moyen de stockage comporte une plaque (39,53) recouverte d'une matière opaque, le moyen pour graver comportant une pointe pour graver (42,59) adaptée à enlever la matière opaque pour graver la trajectoire correspondant à celle du point de référence.

8. Dispositif selon la revendication 4, 5 ou 6, caractérisé en ce que le moyen de stockage de motifs comporte une plaque transparente, et le moyen pour graver comprend un dispositif de marquage destiné à opacifier la plaque pour graver la trajectoire correspondant à celle du point de référence.

9. Dispositif selon une quelconque des revendications 4 à 7, caractérisé en ce que le moyen de stockage de motifs comporte dans un emplacement particulier (39) le point de référence (38), le point de référence étant sous le contrôle du dispositif de déplacement (23A) du moyen de stockage de motifs.

10. Dispositif selon une quelconque des revendications 4 à 7, caractérisé en ce que le point de référence est formé dans une plaque (64) distincte du moyen de stockage de motif (50), la plaque étant mobile entre une position dans le faisceau lumineux et une position à l'écart du faisceau lumineux sous le contrôle du dispositif de déplacement du point de référence (51).

11. Dispositif selon la revendication 6 ou une quelconque des revendications 7 à 10 lorsqu'elle est rattachée à la revendication 6, caractérisé en ce que le moyen de stockage de motifs (50) comporte un disque (54) monté en rotation et entraîné par un moteur (55).

12. Dispositif selon la revendication 6 ou une quelconque des revendications 7 à 9 lorsqu'elle est rattachée à la revendication 6, caractérisé en ce que le moyen de stockage de motifs comporte une plaque (19), le dispositif de déplacement du point de référence (23A) comportant des moteurs (26,27) pour déplacement dans deux directions différentes (X,Y).

13. Dispositif selon l'une quelconque des revendications 4 à 12, caractérisé en ce que le dispositif de commande de déplacement (20) comporte en outre une machine à dessiner (21) ayant une pointe déplaçable et accessible à l'utilisateur pour dessiner la trajectoire du point de référence désirée pour un dispositif de positionnement (23) et commander directement ou indirectement le dispositif de déplacement du point de référence (23A), le mouvement de la pointe étant transmis au dispositif de positionnement (23).

14. Dispositif selon la revendication 13, caractérisé en ce que le moyen de stockage de motifs (19) est sous le contrôle du dispositif de positionnement (23).

15. Dispositif selon la revendication 13 ou 14, caractérisé en ce que le dispositif de déplacement (23A) est sous le contrôle du dispositif de positionnement (23).

16. Dispositif selon une quelconque des revendications 13 à 15 lorsqu'elle est rattachée à la revendication 5, caractérisé en ce que le dispositif d'enregistrement (22) est sous contrôle du dispositif de positionnement (23).

17. Dispositif selon l'une quelconque des revendications 4 à 16 caractérisé en ce que le déplacement du moyen pour graver (42,59) par rapport au moyen de stockage de motifs (19,50) est proportionnel au déplacement déjà effectué du point de référence (38,65) dans le faisceau lumineux pour définir la zone de lumière contrastée.

18. Dispositif selon l'une quelconque des revendications 4 à 16 caractérisé en ce que des données des motifs enregistrés sont converties par un facteur approprié pour adapter les motifs pour la projection dans un lieu de projection autre que le lieu d'enregistrement.

## Claims

1. A process for producing and imprinting a motif intended to form an illuminated zone (18) of any shape and size, after being placed in the beam of light of a projector, said illuminated zone being displayed on a screen (E), said process being characterised in that it comprises the following stages:
- defining a point of reference (38, 65) which forms, by projection, a contrast light zone (40) on said screen;
- displacing said point of reference in the beam of light of the projector in such a way that its trajectory defines a desired, contrast light zone, and display of this displacement;
- imprinting, either simultaneously with, or subsequent to, the displacement of the point of reference, along a trajectory corresponding to that of the point of reference on a motif storage means (19, 50).

2. A process according to Claim 1, characterised in that it comprises additionally, between the stage of displacing the point of reference and the stage of imprinting, a stage whereby the displacement of said point of reference is recorded, and characterised in that the operation of imprinting enables the recorded motif to be imprinted.

3. A process according to any one of the preceding claims, wherein said motif storage means (19, 50) has a plurality of fixed positions (39, 53) for imprinting, and characterised in that said process additionally comprising the following steps:
- positioning any one of the positions (39, 53) of the storage means (19, 50) in the beam of light to project the imprinted motif into the marked position selected subsequently from any one of the empty positions, or otherwise, of the storage means relative to an imprinting means.

4. A device for defining and imprinting motifs intended to be placed in a beam of light, comprising a device for projecting beams of light (11, 12) capable of forming an illuminated zone (18) on a screen (E), a motif storage means (19, 50) capable of being placed in the beam of light for the projection of a desired motif, characterised in that it comprises a point of reference (38, 65) capable of being placed in the beam of light of the projection device for forming a contrast light zone (40), a device for displacement of the point of reference (23A, 51) in the beam of light for the purpose of defining a contrast light zone of the desired shape, a means for imprinting (42, 59) which is movable in relation to the motif storage means (19, 50), a control device for displacing (20, 52) the imprinting means relative to the motif storage means along a trajectory which corresponds to that of the point of reference to imprint the desired motif on the storage means.

5. A device according to Claim 4, characterised in that the displacement control device (20, 52) additionally comprises a device for recording (22) the trajectory of the point of reference, in order to control displacement of the imprinting means (42, 59) in relation to the motif storage means (19, 50) along the recorded trajectory.

6. A device according to Claim 4 or Claim 5, characterised in that the motif storage means comprises a plurality of motif positions (39, 53), and that the device additionally comprises a device for displacement (23A; 55, 56) of the motif storage means from position to position either to enable a motif to be imprinted in a pre-selected position, or to enable the imprinted motif to be projected in a pre-selected position.

7. A device according to Claim 4, Claim 5 or Claim 6, characterised in that the storage means comprises a plate (39, 53) which is covered with an opaque material, the imprinting means comprising a point for imprinting (42, 59) which is capable of taking off the opaque material in order to imprint the trajectory corresponding to that of the point of reference.

8. A device according to Claim 4, 5 or 6, characterised in that the motif storage means comprises a transparent plate, and the imprinting means comprises a marking device intended to make the plate opaque to imprint the trajectory corresponding to that of the point of reference.

9. A device according to any one of Claims 4 to 7, characterised in that the motif storage means comprises in a particular position (39) the point of reference (38), the point of reference being controlled by the displacement device (23A) of the motif storage means.

10. A device according to any one of Claims 4 to 7, characterised in that the point of reference is formed in a plate (64) which is separate from the motif storage means (50), the plate being movable between a position in the beam of light and a position alongside the beam of light controlled by the device for displacement of the point of reference (51).

11. A device according to Claim 6 or any one of Claims 7 to 10 in conjunction with Claim 6, characterised in that the motif storage means (50) comprises a disk (54) which is rotatably mounted and which is entrained by a motor (55).

12. A device according to Claim 6 or any one of Claims 7 to 9 in conjunction with Claim 6, characterised in that the motif storage means comprises a plate (19), the device for displacement of the point of reference (23A) comprising motors (26, 27) for displacement in two different directions (X, Y).

13. A device according to any one of Claims 4 to 12, characterised in that the displacement control device (20) additionally comprises a drawing machine (21) which has a displaceable point and which is accessible to the person using the device for the purpose of drawing the trajectory of the desired point of reference for a positioning device (23) and for direct, or indirect, control of the device for displacement of the point of reference (23A), movement of the point being transmitted to the positioning device (23).

14. A device according to Claim 13, characterised in that the motif storage means (19) is controlled by the positioning device (23).

15. A device according to Claim 13 or Claim 14, characterised in that the displacement device (23A) is controlled by the positioning device (230.

16. A device according to any one of Claims 13 to 15 in conjunction with Claim 5, characterised in that the recording device (22) is controlled by the positioning device (23).

17. A device according to any one of Claims 4 to 16, characterised in that the displacement of the imprinting means (42, 59) in relation to the motif storage means (19, 50) is proportional to the displacement already made from the point of reference (38, 65) in the beam of light to define the contrasting light zone.

18. A device according to any one of Claims 4 to 16, characterised in that the data for recorded motifs is converted by an appropriate factor to adapt the motifs for projection in a projection location other than the recording location.

## Patentansprüche

1. Verfahren zum Entwerfen und Gravieren eines Musters, das dazu bestimmt ist, nach Einbringen in das Lichtbündel eines Projektors einen erhellten Bereich (18) von beliebiger Form und Abmessung zu bilden, wobei der erhellte Bereich auf einem Bildschirm (E) sichtbar gemacht wird,
dadurch **gekennzeichnet,**
daß es die folgenden Schritte umfaßt :
- Festlegen eines Bezugspunkts (38, 65), der durch Projektion einen Lichtkontrastbereich (40) auf dem genannten Bildschirm bildet;
- Verschieben des genannten Bezugspunkts im Lichtbündel des Projektors, so daß sein Verschiebeweg einen gewünschten Lichtkontrastbereich definiert und Sichtbarmachung dieser Verschiebung;
- Gravieren, simultan oder nach dem Verschieben des Bezugspunkts, gemäß eines Verschiebewegs, welcher dem des Bezugspunkts auf einem Musterspeichermittel (19, 50) entspricht.

2. Verfahren nach Anspruch 1, dadurch gekennzeichnet, daß es außerdem zwischen dem Vorgang der Verschiebung des Bezugspunkts und dem Vorgang des Gravierens einen Vorhang der Aufzeichnung der Verschiebung des genannten Bezugspunkts umfaßt, und dadurch, daß der Vorgang des Gravierens das Gravieren des aufgezeichneten Musters erlaubt.

3. Vorrichtung nach einem der vorhergehenden Ansprüche, in dem das genannte Musterspeichermittel (19, 50) eine Vielzahl festgelegter, zu gravierender Felder (39, 53) aufweist, und dadurch, daß das genannte Verfahren außerdem folgende Schritte umfaßt :
- Positionieren, bezüglich einer Graviereinrichtung, irgendeines der Felder (39, 53) des Speichermittels (19, 50) im Lichtbündel, um das gravierte Muster in das markierte Feld zu projizieren, später ausgewählt aus irgendeinem der leeren oder nichtleeren Felder des Speichermittels.

4. Vorrichtung zum Festlegen und Gravieren von Mustern, dazu bestimmt, in einem Lichtbündel angeordnet zu werden, enthaltend eine Lichtbündel-Projektionseinrichtung (11, 12), geeignet auf einem Bildschirm E einen erhellten Bereich (18) zu bilden, ein Musterspeichermittel (19, 50), geeignet im Lichtbündel angeordnet zu werden um ein gewünschtes Muster zu projizieren, dadurch gekennzeichnet, daß es einen Bezugspunkt (38, 65) aufweist, geeignet im Lichtbündel der Projektionseinrichtung positioniert zu werden um einen Lichtkontrastbereich (40) zu bilden, eine Verschiebeeinrichtung des Bezugspunkts (23A, 51) in das Lichtbündel, um einen Lichtkontrastbereich von gewünschter Form zu definieren, eine mit Bezug auf die Musterspeichermittel (19, 50) bewegliche Graviereinrichtung (42, 59), eine Steuerungseinrichtung (20, 52) für die Verschiebung der Musterspeichermittel auf einer Bahn, die der des Bezugspunkts entspricht, um das gewünschte Muster auf die Speichermittel zu gravieren.

5. Vorrichtung nach Anspruch 4, dadurch gekennzeichnet, daß die Steuerungseinrichtung für die Verschiebung (20, 52) außerdem eine Aufzeichnungseinrichtung (22) für die Bahn des Bezugspunkts umfaßt, um die Verschiebung der Graviereinrichtung (42, 59) bezogen auf das Musterspeichermittel (19, 50) entsprechend der aufgezeichneten Bahn zu steuern.

6. Vorrichtung nach Anspruch 4 und 5, dadurch gekennzeichnet, daß das Musterspeichermittel eine Vielzahl Musterfelder (39, 53) enthält, und daß die Vorrichtung außerdem eine Verschiebeeinrichtung (23A; 55, 56) des Musterspeichmittels von Feld zu Feld umfaßt, die entweder das Gravieren eines Musters in ein bestimmtes Feld erlaubt oder die Projizierung eines gravierten Musters in ein bestimmtes Feld.

7. Vorrichtung nach Anspruch 4, 5 oder 6, dadurch gekennzeichnet, daß das Speichermittel eine mit einem lichtundurchlässigen Material beschichtete Platte (39, 53) enthält, wobei die Graviereinrichtung eine Gravierspitze (42, 59) enthält, geeignet das lichtundurchlässige Material zu entfernen um die Bahn zu gravieren, die der des Bezugspunkts entspricht.

8. Vorrichtung nach Anspruch 4, 5 oder 6, dadurch gekennzeichnet, daß das Musterspeichermittel eine durchsichtige Platte enthält, und die Graviereinrichtung eine Markierungsvorrichtung umfaßt, dazu bestimmt, die Platte lichtundurchlässig zu machen, um die Bahn zu gravieren, die der des Bezugspunkts entspricht.

9. Vorrichtung nach einem der Ansprüche 4 bis 7, dadurch gekennzeichnet, daß das Musterspeichermittel in einem bestimmten Feld (39) den Bezugspunkt (38) enthält, wobei der Bezugspunkt unter der Kontrolle der Verschiebeeinrichtung (23A) des Musterspeichermittels steht.

10. Vorrichtung nach einem der Ansprüche 4 bis 7, dadurch gekennzeichnet, daß der Bezugspunkt an einer Platte (64) ausgebildet ist, die sich vom Musterspeichermittel (50) unterscheidet, wobei die Platte beweglich ist zwischen einer Stellung im Lichtbündel und einer Stellung außerhalb des Lichtbündels unter der Kontrolle der Verschiebungseinrichtung des Bezugspunkts (51).

11. Vorrichtung nach Anspruch 6 oder irgendeinem der Ansprüche 7 bis 10, wenn er verknüpft ist mit Anspruch 6, dadurch gekennzeichnet, daß das Musterspeichermittel (50) eine Scheibe (54) enthält, drehbar angebracht und von einem Motor (55) angetrieben.

12. Vorrichtung nach Anspruch 6 oder irgendeinem der Ansprüche 7 bis 9, wenn er verknüpft ist mit Anspruch 6, dadurch gekennzeichnet, daß das Musterspeichermittel eine Platte (19) enthält, wobei die Verschiebeeinrichtung des Bezugspunkts (23A) Motoren (26, 27) für Verschieben in zwei verschiedene Richtungen (X, Y) umfaßt.

13. Vorrichtung nach einem der Ansprüche 4 bis 12, dadurch gekennzeichnet, daß die Verschiebesteuerungseinrichtung (20) außerdem eine Zeichenmaschine (21) mit einer beweglichen und benutzerzugänglichen Spitze umfaßt, um die gewünschte Bahn des Bezugspunkts für eine Positioniereinrichtung (23) vorzuzeichnen und direkt oder indirekt die Verschiebeeinrichtung des Bezugspunkts (23A) zu steuern, wobei die Bewegung der Spitze zur Positioniereinrichtung (23) übertragen wird.

14. Vorrichtung nach Anspruch 13, dadurch gekennzeichnet, daß das Musterspeichermittel (19) unter der Kontrolle der Positioniereinrichtung (23) steht.

15. Vorrichtung nach Anspruch 13 oder 14, dadurch gekennzeichnet, daß die Verschiebeeinrichtung (23A) unter der Kontrolle der Positioniereinrichtung (23) steht.

16. Vorrichtung nach irgendeinem der Ansprüche 13 bis 15, wenn er verknüpft ist mit Anspruch 5, dadurch gekennzeichnet, daß die Aufzeichnungseinrichtung (22) unter der Kontrolle der Positionierungseinrichtung (23) steht.

17. Vorrichtung nach einem der Ansprüche 4 bis 16, dadurch gekennzeichnet, daß die Verschiebung der Graviereinrichtung (42, 59) im Verhältnis zum Musteraufzeichnungsmittel (19, 50) proportional ist zu der schon ausgeführten Verschiebung des Bezugspunkts (38, 65) im Lichtbündel, um den Lichtkontrastbereich zu definieren.

18. Vorrichtung nach einem der Ansprüche 4 bis 16, dadurch gekennzeichnet, daß die Daten des gespeicherten Musters konvertiert werden mittels eines geeigneten Faktors, um die Muster für die Projektion an einem anderen Ort als dem Ort der Aufzeichnung anzupassen.
